# DEMANDE DE BREVET EUROPEEN

(11) **EP 4 523 589 A1**
(43) Date de publication de la demande: **19.03.2025**
(21) Numéro de dépôt: 24198254.5
(22) Date de dépôt: 03.09.2024
(51) Int. Cl.: A47L 9/04, A47L 9/28

(54) **TÊTE D'ASPIRATION POURVUE D'UN CIRCUIT DE REFROIDISSEMENT DE MOTEUR DE BROSSE**

(30) Priorité: 06.09.2023 FR 2309352
(71) Demandeur: SEB S.A., 69130 Ecully (FR)
(72) Inventeur: MARTI, Antoine, 69134 ECULLY CEDEX (FR); BAERT, Xavier, 69134 ECULLY CEDEX (FR); GUILLARD, Thomas, 69134 ECULLY CEDEX (FR)
(74) Mandataire: Germain Maureau

(57) **Abrégé**

La tête d'aspiration comprend un corps principal (4) ; une brosse rotative (11) comprenant un corps de brosse (12) ; un compartiment moteur (19) logé dans un logement de moteur (21) délimité par le corps de brosse (12) ; un moteur d'entraînement (17) logé dans le compartiment moteur (19) et configuré pour entraîner en rotation le corps de brosse (12) autour d'un axe de rotation ; et un circuit de refroidissement par circulation d'air (41) relié fluidiquement à la chambre d'aspiration (9) et comportant une première portion de circuit (41.1) délimitée en partie par le moteur d'entraînement (17) et une deuxième portion de circuit (41.2) délimitée en partie par le compartiment moteur (19) et le corps de brosse (12) et située en aval de la première portion de circuit (41.1).

## Description

### Domaine technique

La présente invention concerne le domaine des aspirateurs équipés d'une tête d'aspiration permettant d'aspirer des poussières et des déchets présents sur une surface à nettoyer.

### Etat de la technique

Les aspirateurs équipés d'une tête d'aspiration sont bien connus sur le marché, ceux-ci permettant de nettoyer des surfaces par aspiration pour l'évacuation des poussières et des déchets reposant sur celles-ci. La surface à aspirer peut par exemple être du carrelage, du parquet, du stratifié, de la moquette ou un tapis.

Une tête d'aspiration comprend de façon connue un corps principal comportant une semelle munie d'une face inférieure et d'une bouche d'aspiration débouchant dans la face inférieure de la semelle. La face inférieure de la semelle est destinée à être positionnée de manière attenante à la surface à aspirer durant l'utilisation de la tête d'aspiration.

Afin d'améliorer les performances de nettoyage d'une tête d'aspiration, il est connu d'équiper cette dernière :
- d'une brosse rotative comprenant un corps de brosse qui est mobile en rotation autour d'un axe de rotation et qui est monté, par exemple de manière amovible, dans une chambre d'aspiration délimitée par le corps principal de la tête d'aspiration, le corps de brosse comportant une première portion d'extrémité délimitant un logement de moteur, et une deuxième portion d'extrémité située à l'opposé de la première portion d'extrémité,
- d'une première bague de support fixée à la première portion d'extrémité du corps de brosse et configurée pour supporter ladite première portion d'extrémité, et d'une deuxième bague de support fixée à la deuxième portion d'extrémité du corps de brosse et configurée pour supporter ladite deuxième portion d'extrémité,

- d'un premier palier, tel qu'un palier à roulement, configuré pour guider en rotation la première bague de support, et d'un deuxième palier, tel qu'un palier à roulement, configuré pour guider en rotation la deuxième bague de support, et
- d'un dispositif d'entraînement configuré pour entraîner en rotation le corps de brosse autour de l'axe de rotation, le dispositif d'entraînement comprenant un moteur d'entraînement disposé dans le logement de moteur délimité par la première portion d'extrémité du corps de brosse.

Lors du fonctionnement d'une telle tête d'aspiration où la brosse rotative est mise en rotation, le moteur d'entraînement a tendance à s'échauffer en raison de sa localisation dans le corps de brosse, ce qui peut nuire au fonctionnement du moteur d'entraînement et donc à la fiabilité de la tête d'aspiration.

Afin de limiter l'échauffement du moteur d'entraînement, il est connu d'équiper la tête d'aspiration d'un circuit de refroidissement par circulation d'air relié fluidiquement à la chambre d'aspiration, et de configurer la tête d'aspiration de telle sorte que, lorsqu'une dépression est générée dans la chambre d'aspiration, de l'air est aspiré dans le circuit de refroidissement par circulation d'air depuis l'extérieur de la brosse rotative et est mis en circulation dans le circuit de refroidissement par circulation d'air.

Le document EP2811883 décrit notamment un circuit de refroidissement par circulation d'air comportant une première portion de circuit qui est délimitée en partie par le compartiment moteur et le corps de brosse, et une deuxième portion de circuit qui est délimitée en partie par le moteur d'entraînement et qui est située en aval de la première portion de circuit, le circuit de refroidissement par circulation d'air étant configuré de telle sorte que, lorsqu'une dépression est générée dans la chambre d'aspiration, l'air, mis en circulation dans la première portion de circuit, s'écoule au moins en partie entre le compartiment moteur et le corps de brosse, et de telle sorte que, l'air, mis en circulation dans la deuxième portion de circuit, s'écoule au moins en partie à l'intérieur du moteur d'entraînement.

Bien qu'un tel circuit de refroidissement par circulation d'air assure un refroidissement du moteur d'entraînement, ce refroidissement peut s'avérer insuffisant dans certaines configurations d'utilisation de la tête d'aspiration.

### Résumé de l'invention

La présente invention vise à remédier à tout ou partie de ces inconvénients.

Le problème technique à la base de l'invention consiste notamment à fournir une tête d'aspiration, pourvue d'une brosse rotative et d'un moteur d'entraînement de brosse logé dans la brosse rotative, qui soit de structure simple et économique, tout en assurant un refroidissement satisfaisant du moteur d'entraînement de brosse.

A cet effet, la présente invention concerne une tête d'aspiration comprenant :
- un corps principal comportant une chambre d'aspiration débouchant dans une face inférieure du corps principal qui est configurée pour être orientée vers une surface à nettoyer,
- une brosse rotative comprenant un corps de brosse qui a une forme globalement tubulaire et qui présente un axe longitudinal central, le corps de brosse étant monté mobile en rotation dans la chambre d'aspiration autour d'un axe de rotation qui est sensiblement coaxial avec l'axe longitudinal central du corps de brosse,
- un dispositif d'entraînement configuré pour entraîner en rotation le corps de brosse autour de l'axe de rotation, le dispositif d'entraînement comportant un moteur d'entraînement,
- un compartiment moteur qui est fixe par rapport au corps principal et dans lequel est au moins en partie disposé le moteur d'entraînement, le compartiment moteur et le moteur d'entraînement étant au moins en partie disposés dans un logement de moteur délimité par le corps de brosse, et
- un circuit de refroidissement par circulation d'air relié fluidiquement à la chambre d'aspiration, la tête d'aspiration étant configurée de telle sorte que, lorsqu'une dépression est générée dans la chambre d'aspiration, de l'air est aspiré dans le circuit de refroidissement par circulation d'air depuis l'extérieur de la brosse rotative et est mis en circulation dans le circuit de refroidissement par circulation d'air.

Le circuit de refroidissement par circulation d'air comporte une première portion de circuit qui est délimitée en partie par le moteur d'entraînement et une deuxième portion de circuit qui est délimitée en partie par le compartiment moteur et le corps de brosse et qui est située en aval de la première portion de circuit, et le circuit de refroidissement par circulation d'air est configuré de telle sorte que, lorsqu'une dépression est générée dans la chambre d'aspiration, l'air, mis en circulation dans la première portion de circuit, s'écoule au moins en partie à l'intérieur du moteur d'entraînement, et de telle sorte que, l'air, mis en circulation dans la deuxième portion de circuit, s'écoule au moins en partie entre le compartiment moteur et le corps de brosse.

En conditions d'utilisation, le moteur d'entraînement présente une température bien supérieure à celle du compartiment moteur. Ainsi, le fait que l'air, circulant dans le circuit de refroidissement par circulation d'air, s'écoule d'abord à l'intérieur du moteur d'entraînement puis le long d'une surface externe du compartiment moteur permet de limiter l'échauffement du flux d'air circulant dans la première portion de circuit avant qu'il ne pénètre dans le moteur d'entraînement et donc d'assurer un échange de chaleur optimisé entre le moteur d'entraînement et le flux d'air (en raison d'une différence de température importante). Un tel échange de chaleur optimisé assure un refroidissement optimisé du moteur d'entraînement.

La tête d'aspiration peut en outre présenter une ou plusieurs des caractéristiques suivantes, prises seules ou en combinaison.

Selon un mode de réalisation de l'invention, le moteur d'entraînement comporte un carter de moteur. Le moteur d'entraînement comporte en outre un rotor et un stator qui sont logés dans le carter de moteur.

Selon un mode de réalisation de l'invention, le moteur d'entraînement est intégralement disposé dans le compartiment moteur.

Selon un mode de réalisation de l'invention, la première portion de circuit est configurée de telle sorte que, lorsqu'une dépression est générée dans la chambre d'aspiration, l'air, s'écoulant à l'intérieur du moteur d'entraînement, s'écoule selon une direction d'écoulement qui est sensiblement parallèle à l'axe longitudinal central du corps de brosse.

Selon un mode de réalisation de l'invention, le circuit de refroidissement par circulation d'air est configuré de telle sorte que, lorsqu'une dépression est générée dans la chambre d'aspiration, l'air, mis en circulation dans la première portion de circuit, s'écoule au contact du rotor et/ou du stator du moteur d'entraînement, et par exemple au contact du bobinage du stator et/ou au bobinage du rotor.

Selon un mode de réalisation de l'invention, le circuit de refroidissement par circulation d'air est configuré de telle sorte que, lorsqu'une dépression est générée dans la chambre d'aspiration, l'air, mis en circulation dans la deuxième portion de circuit, s'écoule sensiblement parallèlement à l'axe longitudinal central du corps de brosse.

Selon un mode de réalisation de l'invention, la première portion de circuit comporte au moins une ouverture d'entrée d'air prévue sur une paroi périphérique d'un carter de moteur du moteur d'entraînement et à travers laquelle l'air, mis en circulation dans le circuit de refroidissement par circulation d'air lorsqu'une dépression est générée dans la chambre d'aspiration, est apte à pénétrer dans le moteur d'entraînement, et au moins une ouverture de sortie d'air prévue sur un paroi d'extrémité du carter de moteur et à travers laquelle l'air, ayant pénétré dans le moteur d'entraînement via l'au moins une ouverture d'entrée d'air, est apte à s'écouler à l'extérieur du moteur d'entraînement.

Selon un mode de réalisation de l'invention, l'au moins une ouverture d'entrée d'air, prévue sur le carter de moteur, est orientée sensiblement radialement et l'au moins une ouverture de sortie d'air, prévue sur le carter de moteur, est orientée sensiblement axialement.

Selon un mode de réalisation de l'invention, le corps de brosse comporte une première portion d'extrémité délimitant le logement de moteur et une deuxième portion d'extrémité située à l'opposé de la première portion d'extrémité, et la tête d'aspiration comporte un premier support de brosse, tel qu'une première bague de support de brosse, fixé à la première portion d'extrémité du corps de brosse et configuré pour supporter ladite première portion d'extrémité et un deuxième support de brosse, tel qu'une deuxième bague de support de brosse, fixé à la deuxième portion d'extrémité du corps de brosse et configuré pour supporter ladite deuxième portion d'extrémité. Une telle configuration de la tête d'aspiration assure un guidage en rotation optimisé de la brosse rotative, ce qui limite sensiblement la génération de vibrations au sein de la tête d'aspiration et les risques de grippage de la brosse rotative.

Selon un mode de réalisation de l'invention, le compartiment moteur et le corps de brosse délimite une chambre de liaison qui est située axialement à l'opposé du premier support de brosse par rapport au moteur d'entraînement et qui est configurée pour relier fluidiquement la première portion de circuit à la deuxième portion de circuit. De façon avantageuse, l'au moins une ouverture de sortie d'air est reliée fluidiquement à la chambre de liaison.

Selon un mode de réalisation de l'invention, le moteur d'entraînement est disposé axialement entre les premier et deuxième supports de brosse.

Selon un mode de réalisation de l'invention, le moteur d'entraînement est plus proche du premier support de brosse que du deuxième support de brosse. De façon avantageuse, le moteur d'entraînement est disposé axialement entre le premier support de brosse et un plan vertical médian de la tête d'aspiration. D'où la nécessité de refroidir le premier support de brosse qui s'échauffe plus rapidement que le deuxième support de brosse à cause de sa proximité avec le moteur d'entraînement.

Selon un mode de réalisation de l'invention, le circuit de refroidissement par circulation d'air est configuré de telle sorte, lorsqu'une dépression est générée dans la chambre d'aspiration, l'air, mis en circulation dans le circuit de refroidissement par circulation d'air, s'écoule dans la première portion de circuit en s'éloignant du premier support de brosse, et s'écoule dans la deuxième portion de circuit en direction du premier support de brosse.

Selon un mode de réalisation de l'invention, la tête d'aspiration comporte un premier palier, tel qu'un palier à roulement et par exemple un palier à roulement à billes, configuré pour guider en rotation le premier support de brosse et un deuxième palier, tel qu'un palier à roulement et par exemple un palier à roulement à billes, configuré pour guider en rotation le deuxième support de brosse, le premier support de brosse étant interposé entre le premier palier et une surface circonférentielle interne du corps de brosse.

Selon un mode de réalisation de l'invention, la tête d'aspiration comporte un support de palier qui est fixe par rapport au corps principal, le premier palier étant monté sur le support de palier et supporté par le support de palier.

Selon un mode de réalisation de l'invention, le premier palier est un palier à roulement, et comporte une bague interne qui est fixée au support de palier et qui s'étend autour du support de palier, et une bague externe qui est fixée au premier support de brosse, le premier support de brosse s'étendant autour de la bague externe du palier.

Selon un mode de réalisation de l'invention, le support de palier, le premier palier et e premier support de brosse sont disposés sensiblement coaxialement avec l'axe longitudinal central du corps de brosse.

Selon un mode de réalisation de l'invention, le compartiment moteur est fixé au support de palier.

Selon un mode de réalisation de l'invention, le compartiment moteur comporte un capot de moteur s'étendant autour du moteur d'entraînement et un support de capot fixé au support de palier et configuré pour supporter le capot de moteur. Selon un mode de réalisation de l'invention, le capot de moteur comporte une extrémité ouverte, et le support de capot ferme au moins partiellement l'extrémité ouverte du capot de moteur.

Selon un mode de réalisation de l'invention, le capot de moteur comporte une paroi tubulaire qui s'étend autour du moteur d'entraînement et qui est sensiblement coaxiale avec l'axe de moteur du moteur d'entraînement, et une paroi d'extrémité située à l'opposé du support de capot et pourvue d'une ouverture centrale à travers laquelle fait saillie l'arbre de sortie du moteur d'entraînement.

Selon un mode de réalisation de l'invention, la tête d'aspiration comporte un élément d'amortissement interposé axialement entre le moteur d'entraînement et le support de capot.

Selon un mode de réalisation de l'invention, le support de palier délimite un conduit d'écoulement d'air qui forme en partie la première portion de circuit, le palier s'étendant autour du conduit d'écoulement d'air. Une telle configuration du support de palier assure un refroidissement, par conduction thermique, du support de palier et du premier palier, et en particulier de la bague externe du premier palier. De façon avantageuse, le conduit d'écoulement d'air est relié fluidiquement à l'au moins une ouverture d'admission d'air.

Selon un mode de réalisation de l'invention, le conduit d'écoulement d'air s'étend sensiblement coaxialement avec le premier palier.

Selon un mode de réalisation de l'invention, le circuit de refroidissement par circulation d'air est délimité au moins en partie par le premier support de brosse. Une telle configuration du circuit de refroidissement par circulation d'air assure un refroidissement, par conduction thermique, du premier support de brosse et du premier palier situé à proximité du moteur d'entraînement, et en particulier de la bague externe du premier palier, en raison du fait que l'air circulant dans le circuit de refroidissement par circulation d'air s'écoule à proximité du premier support de brosse.

Selon un mode de réalisation de l'invention, le premier support de brosse est annulaire et comporte au moins un trou traversant qui débouche respectivement dans une première face axiale du premier support de brosse qui est orientée vers le moteur d'entraînement et dans une deuxième face axiale du premier support de brosse qui est opposée à la première face axiale respective, l'au moins un trou traversant étant relié fluidiquement à la chambre d'aspiration et la tête d'aspiration étant configurée de telle sorte que, lorsqu'une dépression est générée dans la chambre d'aspiration, un flux d'air s'écoule au travers de l'au moins un trou traversant et depuis la première face axiale du premier support de brosse vers la deuxième face axiale du premier support de brosse. Une telle configuration du premier support de brosse, et en particulier la présence de l'au moins un trou traversant, assure, lorsqu'une dépression est générée dans la chambre d'aspiration, l'écoulement d'un flux d'air au travers de l'au moins un trou traversant, et donc un refroidissement, par conduction thermique, du premier support de brosse et du premier palier situé à proximité du moteur d'entraînement. Un tel refroidissement permet de limiter l'échauffement du premier palier et ainsi de préserver son intégrité, et donc de conférer une fiabilité accrue à la tête d'aspiration selon la présente invention, et également de pouvoir utiliser un premier palier de plus petites dimensions et ainsi de réduire l'encombrement radial de la brosse rotative.

Selon un mode de réalisation de l'invention, l'au moins un trou traversant débouche dans le logement de moteur.

Selon un mode de réalisation de l'invention, le premier support de brosse comporte une paroi interne qui est globalement cylindrique et qui s'étend autour et au contact du premier palier, la paroi interne du premier support de brosse comportant au moins une ouverture traversante radiale, s'étendant selon une direction radiale, débouchant dans l'au moins un trou traversant prévu sur le premier support de brosse et étant située en regard du premier palier. Une telle configuration du premier support de brosse permet de favoriser encore le refroidissement du premier palier, et en particulier de sa bague externe, par le flux d'air s'écoulant à travers l'au moins un trou traversant.

Selon un mode de réalisation de l'invention, la paroi interne du premier support de brosse comporte une pluralité d'ouvertures traversantes radiales réparties autour de l'axe central du premier support de brosse, chaque ouverture traversante radiale débouchant dans un trou traversant respectif prévu sur le premier support de brosse et étant située en regard du premier palier, et par exemple en regard de la bague externe du premier palier.

Selon un mode de réalisation de l'invention, le circuit de refroidissement par circulation d'air comporte au moins une ouverture d'évacuation d'air au travers de laquelle l'air s'écoulant dans le circuit de refroidissement par circulation d'air est apte à être évacué hors du circuit de refroidissement par circulation d'air, l'au moins une ouverture d'évacuation d'air étant formée par l'au moins un trou traversant prévu sur le premier support de brosse. Ainsi, la tête d'aspiration est configurée de telle sorte que l'air aspiré dans le circuit de refroidissement par circulation d'air est évacué hors du circuit de refroidissement par circulation d'air via l'au moins un trou traversant prévu sur le premier support de brosse.

Selon un mode de réalisation de l'invention, l'au moins un trou traversant prévu sur le premier support de brosse est délimité au moins en partie par au moins une paroi de guidage de flux qui est inclinée par rapport à un axe central du premier support de brosse et qui est configurée pour générer une dépression au sein de l'au moins un trou traversant lorsque le moteur d'entraînement est en marche et entraîne en rotation la brosse rotative. Une telle configuration du premier support de brosse augmente le débit d'air dans le circuit de refroidissement par circulation d'air, et favorise donc encore le refroidissement du moteur d'entraînement et du premier palier.

Selon un mode de réalisation de l'invention, l'au moins une paroi de guidage de flux forme une ailette de guidage de flux, également nommée pale.

Selon un mode de réalisation de l'invention, l'au moins une paroi de guidage de flux présente une dimension axiale et une dimension radiale qui est inférieure à la dimension axiale respective.

Selon un mode de réalisation de l'invention, l'au moins un trou traversant prévu sur le premier support de brosse est délimité au moins en partie par deux parois de guidage de flux qui sont inclinées par rapport à l'axe central du premier support de brosse et qui sont situées en regard l'une de l'autre, les deux parois de guidage de flux délimitant au moins en partie l'au moins un trou traversant étant configurées pour générer une dépression au sein de l'au moins un trou traversant lorsque le moteur d'entraînement est en marche et entraîne en rotation la brosse rotative.

Selon un mode de réalisation de l'invention, le premier support de brosse forme une turbine pourvue d'ailettes de guidage de flux réparties autour d'un axe central du premier support de brosse, chaque paire d'ailettes de guidage de flux adjacentes délimitant en partie un trou traversant respectif, et le premier support de brosse, formant la turbine, est configuré pour générer une dépression au sein de l'au moins un trou traversant lorsque le moteur d'entraînement est en marche et entraîne en rotation la brosse rotative. Ainsi, lorsque le corps de brosse est entraîné en rotation, le premier support de brosse, formant turbine et solidaire en rotation du corps de brosse, est également entraîné en rotation de telle sorte que la turbine puisse aspirer l'air depuis la première face axiale du premier support de brosse vers la deuxième face axiale du premier support de brosse. Autrement dit, le premier support de brosse formant turbine permet lorsqu'il est entraîné en rotation par la rotation de la brosse rotative de forcer un écoulement d'air depuis l'intérieur de la brosse rotative vers l'extérieur de la brosse rotative.

Selon un mode de réalisation de l'invention, chaque ailette de guidage de flux présente une dimension axiale et une dimension radiale qui est inférieure à la dimension axiale respective. Une telle configuration du premier support de brosse permet d'optimiser l'encombrement radial du premier support de brosse, et ainsi soit de réduire l'encombrement radiale de la brosse rotative, soit d'augmenter les dimensions radiales du premier palier et donc d'augmenter sa durée de vie.

Selon un mode de réalisation de l'invention, le circuit de refroidissement par circulation d'air comporte au moins une ouverture d'admission d'air au travers de laquelle de l'air est apte à être aspiré dans le circuit de refroidissement par circulation d'air, l'au moins une ouverture d'admission d'air étant prévue sur une paroi latérale du corps principal, et par exemple sur une paroi latérale du corps principal située du côté du support de palier et avantageusement à laquelle est fixé le support de palier.

Selon un mode de réalisation de l'invention, l'au moins un ouverture d'admission d'air est orientée sensiblement axialement, c'est-à-dire sensiblement parallèlement à l'axe longitudinal central du corps de brosse. Une telle orientation de l'au moins un ouverture d'admission d'air limite les risques d'aspiration de poussières par le circuit de refroidissement par circulation d'air, ce qui permet de réduire sensiblement les risques d'encrassement, voire de colmatage, du circuit de refroidissement par circulation d'air et donc d'assurer un refroidissement optimal du moteur d'entraînement et également du premier palier lorsque le circuit de refroidissement par circulation d'air est délimité en partie par le premier support de brosse.

Selon un mode de réalisation de l'invention, le compartiment moteur délimite un logement interne qui est relié fluidiquement à l'au moins une ouverture d'admission d'air appartenant au circuit de refroidissement par circulation d'air.

Selon un mode de réalisation de l'invention, l'au moins une ouverture d'entrée d'air, prévue sur le carter de moteur, débouche dans le logement interne délimité par le compartiment moteur.

Selon un mode de réalisation de l'invention, l'au moins un ouverture d'admission d'air est sensiblement coaxiale avec l'axe longitudinal central du corps de brosse.

Selon un mode de réalisation de l'invention, le moteur d'entraînement est situé à distance des parois latérales du corps principal. Une telle disposition du moteur d'entraînement assure un meilleur équilibrage des masses au sein du corps principal, et en particulier autour de l'axe longitudinal central.

Selon un mode de réalisation de l'invention, le premier support de brosse comporte une pluralité de trous traversants répartis autour de l'axe central du premier support de brosse, chaque trou traversant débouchant respectivement dans les première et deuxième faces axiales du premier support de brosse et étant configuré pour permettre le passage d'un flux d'air au travers dudit trou traversant.

Selon un mode de réalisation de l'invention, la tête d'aspiration comporte un dispositif de fixation configuré pour fixer le premier palier au premier support de brosse.

Selon un mode de réalisation de l'invention, le dispositif de fixation comporte au moins une patte de fixation qui est élastiquement déformable et qui est prévue sur le premier support de brosse, l'au moins une patte de fixation étant configurée pour coopérer avec le premier palier, et plus particulièrement avec la bague externe du premier palier, de manière à fixer le premier palier au premier support de brosse.

Selon un mode de réalisation de l'invention, l'au moins une patte de fixation s'étend sensiblement parallèlement à l'axe central du premier support de brosse.

Selon un mode de réalisation de l'invention, le premier support de brosse comporte au moins un organe de butée, tel qu'une nervure de butée, pourvu d'une surface de butée axiale contre laquelle vient en butée le premier palier lorsque le premier palier est fixé au premier support de brosse.

Selon un mode de réalisation de l'invention, le premier support de brosse comporte un logement de palier dans lequel est reçu le premier palier.

Selon un mode de réalisation de l'invention, l'au moins une patte de fixation comporte une portion de retenue configurée pour retenir le premier palier dans le logement de palier.

Selon un mode de réalisation de l'invention, l'au moins une patte de fixation est configurée pour immobiliser axialement le premier palier par rapport au premier support de brosse.

Selon un mode de réalisation de l'invention, le dispositif de fixation comporte une pluralité de pattes de fixation réparties autour de l'axe central du premier support de brosse.

Selon un mode de réalisation de l'invention, la brosse rotative comprend en outre des moyens d'accouplement disposés dans le corps de brosse et configurés pour s'accoupler en rotation avec des moyens d'accouplement complémentaires qui appartiennent au dispositif d'entraînement et qui sont couplés en rotation à l'arbre de sortie du moteur d'entraînement.

Selon un mode de réalisation de l'invention, le corps de brosse est configuré pour être monté de manière amovible dans la chambre d'aspiration, par exemple selon une direction de montage qui s'étend sensiblement perpendiculairement à une direction de déplacement de la tête d'aspiration.

Selon un mode de réalisation de l'invention, le corps principal comporte une ouverture de passage débouchant dans la chambre d'aspiration et à travers laquelle le corps de brosse est apte à être introduit dans et retiré hors de la chambre d'aspiration, la tête d'aspiration comprenant un bouchon de fermeture qui est configuré pour fermer au moins partiellement l'ouverture de passage, le corps de brosse étant monté rotatif par rapport au bouchon de fermeture.

Selon le mode de réalisation de l'invention, l'ouverture de passage est prévue sur une paroi latérale du corps principal.

Selon un mode de réalisation de l'invention, le deuxième support de brosse est monté mobile en rotation par rapport au bouchon de fermeture.

Selon un mode de réalisation de l'invention, la brosse rotative comporte des poils prévus sur la surface externe du corps de brosse. De façon avantageuse, la brosse rotative comporte au moins une rangée de poils prévues sur la surface externe du corps de brosse.

Selon un mode de réalisation de l'invention, le corps principal comprend une semelle munie de la face inférieure qui est configurée pour être orientée vers la surface à nettoyer, et d'une bouche d'aspiration débouchant dans la face inférieure. De façon avantageuse, la chambre d'aspiration débouche dans la face inférieure de la semelle via la bouche d'aspiration.

Selon un mode de réalisation de l'invention, la bouche d'aspiration présente une forme allongée et s'étend sensiblement perpendiculairement à la direction de déplacement de la tête d'aspiration.

### Brève description des figures

De toute façon l'invention sera bien comprise à l'aide de la description qui suit en référence aux dessins schématiques annexés représentant, à titre d'exemple non limitatif, une forme d'exécution de cette tête d'aspiration.
La figure 1 est une vue en perspective de dessus d'une tête d'aspiration selon la présente invention.
La figure 2 est une vue en perspective de dessus de la tête d'aspiration de la figure 1 montrant une brosse rotative de la tête d'aspiration partiellement retirée.
La figure 3 est une vue en perspective de dessus de la tête d'aspiration de la figure 1.
La figure 4 est une vue en coupe longitudinale de la tête d'aspiration de la figure 1.
La figure 5 est une vue en coupe longitudinale de la tête d'aspiration de la figure 1 montrant la brosse rotative de la tête d'aspiration partiellement retirée.
La figure 6 est une vue, à l'échelle agrandie, d'un détail de la figure 4.
La figure 7 est une vue en perspective d'un sous-ensemble, appartenant à la tête d'aspiration de la figure 1, comprenant un dispositif d'entraînement, un support de capot, un palier, un support de palier et un support de brosse.
La figure 8 est une vue en perspective d'un support de brosse appartenant à la tête d'aspiration de la figure 1.
La figure 9 est une vue en perspective, tronquée, du support de brosse de la figure 8.
La figure 10 est une vue en coupe longitudinale de la tête d'aspiration de la figure 1 dans laquelle les portions de gauche et de droite de la tête d'aspiration ont été coupées selon deux plans de coupe longitudinaux décalés l'un par rapport à l'autre.

### Description détaillée

A défaut de stipulation contraire, le terme « sensiblement » signifie, dans le présent document, « exactement ou à 10% ou à 10° près ».

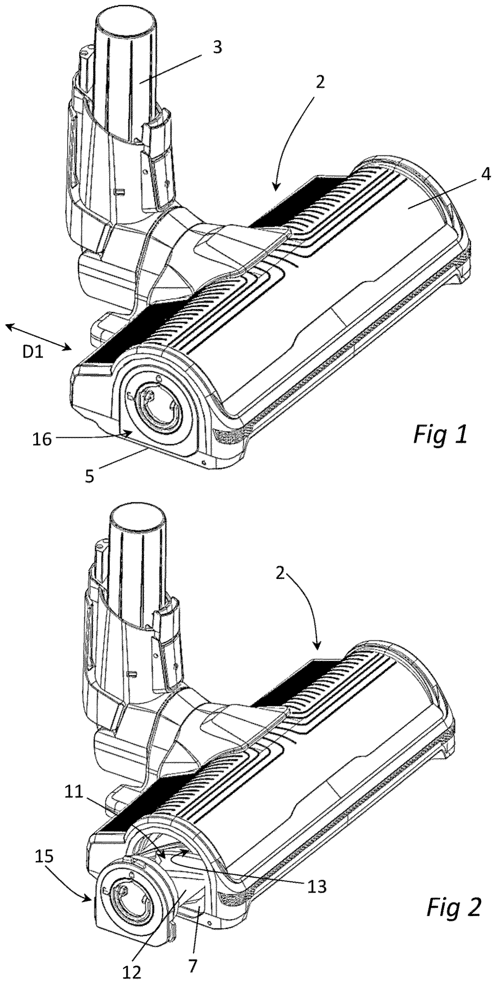

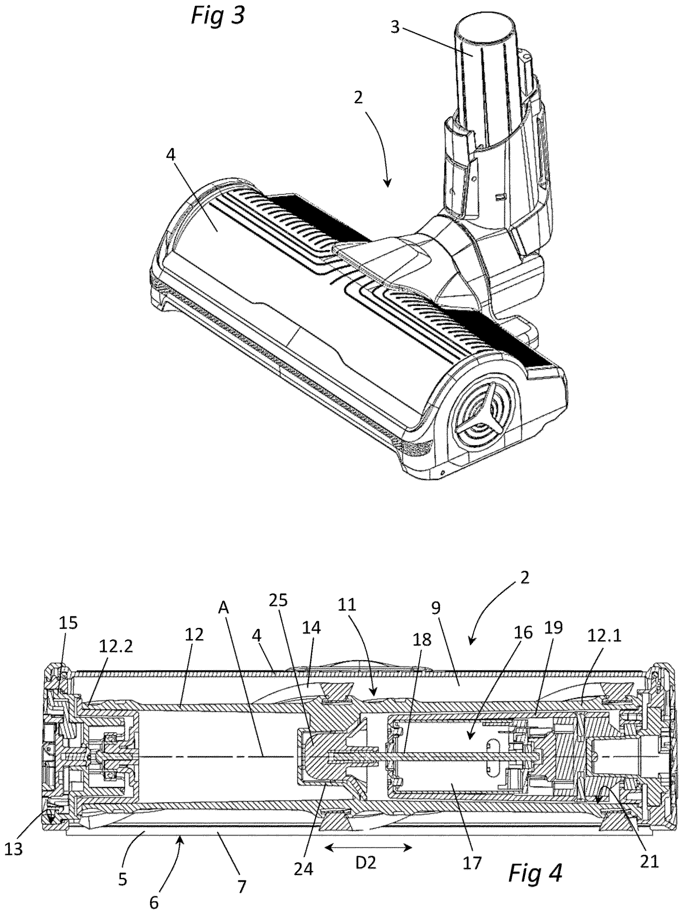

Les figures 1 à 10 représentent une tête d'aspiration 2 comprenant un manchon de raccordement 3 auquel est destiné à être raccordé un embout d'un tube rigide ou flexible, lui-même raccordé à un système d'aspiration d'un aspirateur (non illustré). Diverses variantes d'aspirateurs existent déjà sur le marché et pourront être utilisées avec la tête d'aspiration 2 selon l'invention ; ces variantes étant connues de l'homme du métier, elles ne sont pas détaillées dans la présente demande de brevet.

La tête d'aspiration 2 comprend un corps principal 4 configuré pour être déplacé sur une surface à nettoyer. Le manchon de raccordement 3 est avantageusement monté en liaison pivot par rapport au corps principal 4 de manière à permettre un pivotement du manchon de raccordement 3, par rapport au corps principal 4, vers l'avant et vers l'arrière lors d'un déplacement de la tête d'aspiration 2 selon une direction de déplacement D1.

Le corps principal 4 comprend une semelle 5 munie d'une face inférieure 6 configurée pour être orientée vers la surface à nettoyer, et d'une bouche d'aspiration 7 débouchant sur la face inférieure 6. La bouche d'aspiration 7 communique avec le manchon de raccordement 3 par le biais notamment d'un conduit d'aspiration formé au moins en partie par exemple par un conduit de liaison flexible. La bouche d'aspiration 7 peut par exemple présenter une forme allongée et s'étendre transversalement, et par exemple perpendiculairement, à la direction de déplacement D1 de la tête d'aspiration 2.

Le corps principal 4 comprend en outre une chambre d'aspiration 9 qui débouche dans la face inférieure 6 de la semelle 5 via la bouche d'aspiration 7, et qui est relié fluidiquement au conduit d'aspiration.

La tête d'aspiration 2 comprend également une brosse rotative 11 comprenant un corps de brosse 12 qui a une forme globalement tubulaire et qui présente un axe longitudinal central A. Le corps de brosse 12 est monté mobile en rotation dans la chambre d'aspiration 9 autour d'un axe de rotation qui est coaxial avec l'axe longitudinal central A du corps de brosse 12.

De façon avantageuse, le corps de brosse 12 est monté de manière amovible dans la chambre d'aspiration 9 et est configuré pour être introduit dans et retiré hors de la chambre d'aspiration 9 selon une direction de montage D2. La direction de montage D2 s'étend transversalement, et de préférence perpendiculairement, à la direction de déplacement D1 de la tête d'aspiration 2.

Selon le mode de réalisation représenté sur les figures, le corps principal 4 comporte une ouverture de passage 13 débouchant dans la chambre d'aspiration 9 et à travers laquelle le corps de brosse 12 peut être introduit dans et retiré hors de la chambre d'aspiration 9. De façon avantageuse, l'ouverture de passage 13 est prévue sur une paroi latérale du corps principal 4.

Selon le mode de réalisation représenté sur les figures, la brosse rotative 11 comporte des poils 14 prévus sur la surface externe du corps de brosse 12. De façon avantageuse, le corps de brosse 12 est globalement cylindrique à section circulaire, et la brosse rotative 11 comporte une pluralité de rangées de poils s'étendant par exemple hélicoïdalement autour de l'axe longitudinal central A du corps de brosse 12. Selon une variante de réalisation non représentée sur les figures, les rangées de poils pourraient être remplacées par des lamelles élastiquement déformables ou par un manchon de nettoyage en mousse. Selon une autre variante de réalisation non représentée sur les figures, la brosse rotative 11 pourrait comporter au moins rangée de poils et au moins une lamelle élastiquement déformable.

La tête d'aspiration 2 comporte en outre un bouchon de fermeture 15 qui est configuré pour fermer au moins partiellement l'ouverture de passage 13 lorsque le corps de brosse 12 est monté dans la chambre d'aspiration 9.

La tête d'aspiration 2 comporte également un dispositif d'entraînement 16 configuré pour entraîner en rotation le corps de brosse 12 autour de l'axe de rotation. Le dispositif d'entraînement 16 comprend plus particulièrement un moteur d'entraînement 17, de préférence électrique, comprenant un arbre de sortie 18 qui est coaxial avec l'axe de rotation du corps de brosse 12.

Le moteur d'entraînement 17 est logé dans un compartiment moteur 19 fixé à une paroi latérale du corps principal 4, et le compartiment moteur 19 et le moteur d'entraînement 17 sont disposés dans un logement de moteur 21 délimité par le corps de brosse 12. De façon connue, le moteur d'entraînement 17 comporte un carter de moteur 22, et également un rotor et un stator (non représentés sur les figures) qui sont logés dans le carter de moteur 22. De façon avantageuse, le moteur d'entraînement 17 est situé à distance des parois latérales du corps principal 4. Avantageusement, le moteur d'entraînement 17 est décentré par rapport à un plan vertical médian du corps principal 4 et est disposé entre le plan vertical médian du corps principal 4 et l'une des deux parois latérales.

Selon le mode de réalisation représenté sur les figures, le corps de brosse 12 comporte une première portion d'extrémité 12.1 qui est située à proximité du dispositif d'entraînement 16 et qui délimite le logement de moteur 21, et une deuxième portion d'extrémité 12.2 qui est supportée par le bouchon de fermeture 15 et qui est montée mobile en rotation par rapport au bouchon de fermeture 15.

La brosse rotative 11 comporte en outre une partie d'accouplement 24 qui est disposée dans le corps de brosse 12 et qui est configurée pour s'accoupler en rotation avec une partie d'accouplement complémentaire 25 qui appartient au dispositif d'entraînement 16 et qui est couplée en rotation à l'arbre de sortie 18 du moteur d'entraînement 17. Selon le mode de réalisation représenté sur les figures, la partie d'accouplement 24 est une partie d'accouplement femelle et la partie d'accouplement complémentaire 25 est une partie d'accouplement mâle. Toutefois, selon une variante de réalisation de l'invention, la partie d'accouplement 24 pourrait être une partie d'accouplement mâle et la partie d'accouplement complémentaire 25 pourrait être une partie d'accouplement femelle.

La tête d'aspiration 2 comporte également un premier support de brosse 26, tel qu'une première bague de support de brosse, qui est fixé à la première portion d'extrémité 12.1 du corps de brosse 12 et qui est configuré pour supporter la première portion d'extrémité 12.1, et un deuxième support de brosse 27, tel qu'une deuxième bague de support de brosse, qui est fixé, par exemple par collage ou soudure, à la deuxième portion d'extrémité 12.2 du corps de brosse 12 et qui est configuré pour supporter la deuxième portion d'extrémité 12.2. De façon avantageuse, le premier support de brosse 26 et le deuxième support de brosse 27 sont annulaires et sont disposés coaxialement avec l'axe longitudinal central A du corps de brosse 12, et le moteur d'entraînement 17 est disposé axialement entre le premier support de brosse 26 et le deuxième de support de brosse 27.

Selon le mode de réalisation représenté sur les figures, le moteur d'entraînement 17 est plus proche du premier support de brosse 26 que du deuxième support de brosse 27. De façon avantageuse, le moteur d'entraînement 17 est disposé axialement entre le premier support de brosse 26 et le plan vertical médian du corps de brosse 12.

La tête d'aspiration 2 comporte en outre un premier palier 28, tel qu'un palier à roulement et par exemple un palier à roulement à billes, configuré pour guider en rotation le premier support de brosse 26, et un deuxième palier 29, tel qu'un palier à roulement et par exemple un palier à roulement à billes, configuré pour guider en rotation le deuxième de support de brosse 27. De façon avantageuse, le deuxième palier 29 est interposé entre le deuxième de support de brosse 27 et une partie de support appartenant au bouchon de fermeture 15.

Selon le mode de réalisation représenté sur les figures, la tête d'aspiration 2 comporte un support de palier 31 qui est fixé à une paroi latérale du corps principal 4 et qui est coaxial avec l'axe longitudinal central A, et le premier palier 28 est monté sur le support de palier 31 et est supporté par le support de palier 31.

Le premier palier 28 comporte plus particulièrement une bague interne 28.1 qui est fixée au support de palier 31 et qui s'étend autour du support de palier 31, et une bague externe 28.2 qui est mobile en rotation par rapport à la bague interne 28.1 et qui est fixée au premier support de brosse 26. De façon avantageuse, le premier support de brosse 26 est disposé dans la première portion d'extrémité 12.1 du corps de brosse 12, et est interposé entre la bague externe 28.2 du premier palier 28 et une surface circonférentielle interne du corps de brosse 12.

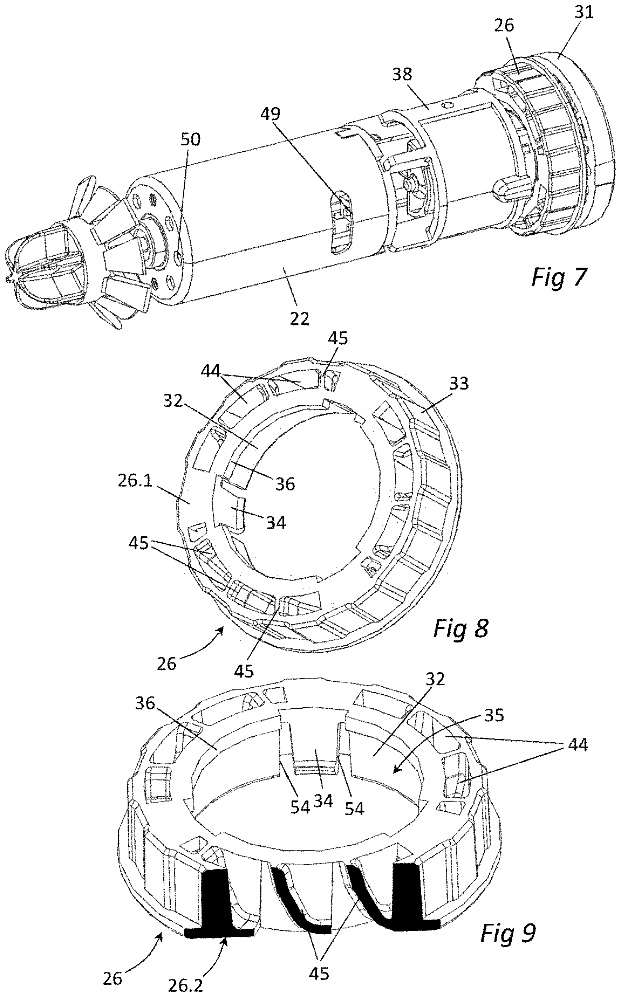

Comme montré plus particulièrement sur la figure 8, le premier support de brosse 26 comporte une paroi interne 32 qui est globalement cylindrique et qui s'étend autour et au contact de la bague externe 28.2 du premier palier 28, et une paroi externe 33 qui est globalement cylindrique et qui coopère avec la surface circonférentielle interne du corps de brosse 12.

La tête d'aspiration 2 comporte avantageusement un dispositif de fixation configuré pour fixer le premier palier 28 au premier support de brosse 26. Selon le mode de réalisation représenté sur les figures, le dispositif de fixation comporte une pluralité de pattes de fixation 34 qui sont prévues sur le premier support de brosse 26, qui sont réparties autour de l'axe central du premier support de brosse 26 et qui s'étendent sensiblement parallèlement à l'axe central du premier support de brosse 26. Les pattes de fixation 34 sont configurées pour coopérer avec le premier palier 28, et plus particulièrement avec la bague externe 28.2 du premier palier 28, de manière à fixer le premier palier 28 au premier support de brosse 26 et en particulier de manière à immobiliser axialement le premier palier 28 par rapport au premier support de brosse 26. De façon avantageuse, le premier support de brosse 26 comporte un logement de palier 35 dans lequel est reçu le premier palier 28, et chaque patte de fixation 34 est élastiquement déformable et comporte une portion de retenue configurée pour retenir le premier palier 28 dans le logement de palier 35.

Le premier support de brosse 26 peut par exemple comporter une pluralité d'organes de butée 36, tels que des nervures de butée, répartis autour de l'axe central du premier support de brosse 26 et s'étendant circonférentiellement. Chaque organe de butée 36 délimite en partie le logement de palier 35 et est pourvu d'une surface de butée axiale contre laquelle vient en butée le premier palier 28 lorsque le premier palier 28 est logé dans le logement de palier 35.

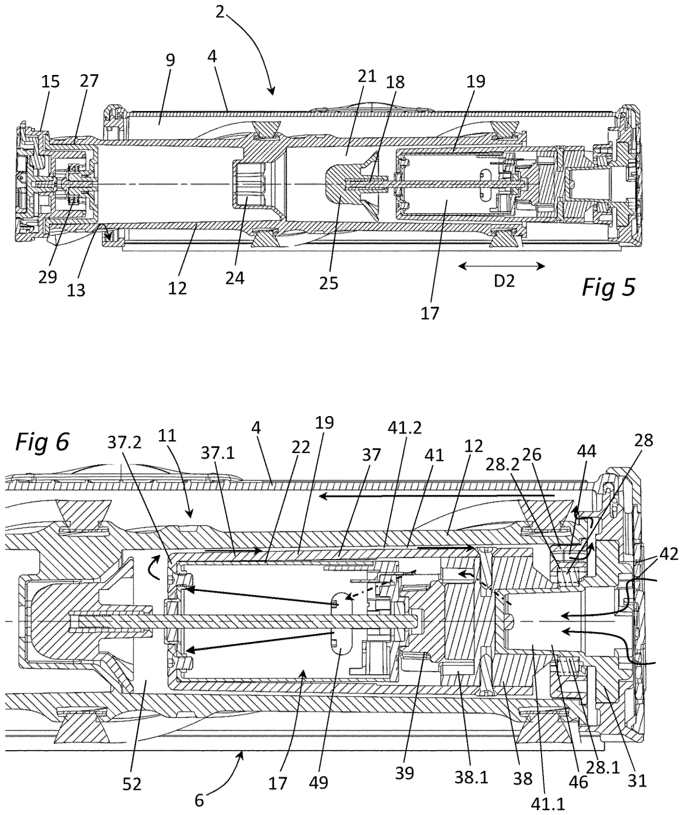

Comme montré sur la figure 6, le compartiment moteur 19 est fixé au support de palier 31, et le premier palier 28 est enserré axialement entre une première surface de buté prévue sur le support de palier 31 et une deuxième surface de butée prévue sur le compartiment moteur 19.

Selon le mode de réalisation représenté sur les figures, le compartiment moteur 19 comporte un capot de moteur 37 s'étendant autour du moteur d'entraînement 17 et un support de capot 38 fixé au support de palier 31 et configuré pour supporter le capot de moteur 37. Le capot de moteur 37 comporte plus particulièrement une paroi tubulaire 37.1 qui s'étend autour du moteur d'entraînement 17 et qui est sensiblement coaxiale avec l'axe de moteur du moteur d'entraînement 17, et une paroi d'extrémité 37.2 située à l'opposé du support de capot 38 et pourvue d'une ouverture centrale à travers laquelle fait saillie l'arbre de sortie 18 du moteur d'entraînement 17. Le capot de moteur 37 comporte en outre une extrémité ouverte qui est au moins partiellement fermée par le support de capot 38. De façon avantageuse, la tête d'aspiration 2 comporte un élément d'amortissement 39 interposé axialement entre le moteur d'entraînement 17 et le support de capot 38.

La tête d'aspiration 2 comporte de plus un circuit de refroidissement par circulation d'air 41 délimité au moins en partie par le support de palier 31, le moteur d'entraînement 17, le compartiment moteur 19, le corps de brosse 12 et le premier support de brosse 26. La tête d'aspiration 2 est configurée de telle sorte que, lorsque le moteur d'entraînement 17 est en marche, une dépression est générée dans le circuit de refroidissement par circulation d'air 41 et de l'air est aspiré dans le circuit de refroidissement par circulation d'air 41 depuis l'extérieur de la brosse rotative 11 et est mis en circulation dans le circuit de refroidissement par circulation d'air 41, afin d'assurer un refroidissement notamment du moteur d'entraînement 17 et du premier palier 28.

Le circuit de refroidissement par circulation d'air 41 comporte au moins une ouverture d'admission d'air 42 au travers de laquelle de l'air est apte à être aspiré dans le circuit de refroidissement par circulation d'air 41. De façon avantageuse, la ou les ouverture(s) d'admission d'air 42 est(sont) prévue(s) sur une paroi latérale du corps principal 4, et plus particulièrement sur la paroi latérale du corps de brosse à laquelle est fixé le support de palier 31.

Le circuit de refroidissement par circulation d'air 41 comporte en outre une pluralité d'ouvertures d'évacuation d'air au travers desquelles l'air s'écoulant dans le circuit de refroidissement par circulation d'air 41 est apte à être évacué hors du circuit de refroidissement par circulation d'air 41. Selon le mode de réalisation représenté sur les figures, les ouvertures d'évacuation d'air sont formées par des trous traversants 44 prévus sur le premier support de brosse 26 et configurés pour relier fluidiquement le logement de moteur 21 à la chambre d'aspiration 9, et donc au conduit d'aspiration.

Comme montré sur la figure 8, les trous traversants 44 sont répartis autour de l'axe central du premier support de brosse 26, et chaque trou traversant 44 débouche respectivement dans une première face axiale 26.1 du premier support de brosse 26 qui est orientée vers le moteur d'entraînement 17 et qui délimite en partie le logement de moteur 21 et dans une deuxième face axiale 26.2 du premier support de brosse 26 qui est située à l'extérieur du corps de brosse 12 et qui est orientée vers la paroi latérale du corps principal 4 à laquelle est fixé le support de palier 31. Chaque trou traversant 44 est plus particulièrement configuré pour permettre le passage d'un flux d'air au travers dudit trou traversant 44 et depuis la première face axiale 26.1 du premier support de brosse 26 (et donc depuis le logement de moteur 21) vers la deuxième face axiale 26.2 du premier support de brosse 26 (et donc vers l'extérieur de la brosse rotative 11).

Selon le mode de réalisation représenté sur les figures, chaque trou traversant 44 prévu sur le premier support de brosse 26 est délimité par les parois interne et externe 32, 33 du premier support de brosse 26 et par deux parois de guidage de flux 45 qui sont inclinées par rapport à l'axe central du premier support de brosse 26 et qui sont situées en regard l'une de l'autre. De façon avantageuse, les parois de guidage de flux 45 sont régulièrement réparties autour de l'axe central du premier support de brosse 26, et sont configurées pour relier mécaniquement entre elles les parois interne et externe 32, 33 du premier support de brosse 26.

Les deux parois de guidage de flux 45, qui délimitent en partie un trou traversant 44 respectif, sont plus particulièrement configurées pour générer une dépression au sein du trou traversant 44 respectif lorsque le moteur d'entraînement 17 est en marche et entraine en rotation la brosse rotative 11 ainsi que le premier support de brosse 26. Ainsi, chaque paroi de guidage de flux 45 prévue sur le premier support de brosse 26 forme une ailette de guidage de flux, et le premier support de brosse 26 forme une turbine pourvue d'ailettes de guidage de flux réparties autour de l'axe central du premier support de brosse 26. De façon avantageuse, chaque ailette de guidage de flux, et donc chaque paroi de guidage de flux 45, présente une dimension axiale et une dimension radiale qui est inférieure à la dimension axiale respective.

Le circuit de refroidissement par circulation d'air 41 comporte plus particulièrement une première portion de circuit 41.1 qui comporte l'au moins une ouverture d'admission d'air 42 et qui est délimitée en partie par le support de palier 31, le support de capot 38, le moteur d'entraînement 17 et le capot de moteur 37, et une deuxième portion de circuit 41.2 qui comporte les ouvertures d'évacuation d'air (formées par les trous traversants 44), qui est délimitée en partie par le compartiment moteur 19 et le corps de brosse 12 et qui est située en aval de la première portion de circuit 41.1.

Comme montré sur la figure 6, le circuit de refroidissement par circulation d'air 41 est configuré de telle sorte que, lorsque le moteur d'entraînement 17 est en marche l'air, mis en circulation dans le circuit de refroidissement par circulation d'air 41, s'écoule dans la première portion de circuit 41.1 en s'éloignant du premier support de brosse 26 (et donc en direction du bouchon de fermeture 15), et s'écoule dans la deuxième portion de circuit 41.2 en direction du premier support de brosse 26.

Selon le mode de réalisation représenté sur les figures, le support de palier 31 est creux et comporte un conduit d'écoulement d'air 46 qui s'étend sensiblement coaxialement avec le premier palier 28 et qui forme en partie la première portion de circuit 41.1. De façon avantageuse, le conduit d'écoulement d'air46 est relié fluidiquement à l'au moins une ouverture d'admission d'air 42, et le premier palier 28 s'étend autour du conduit d'écoulement d'air 46.

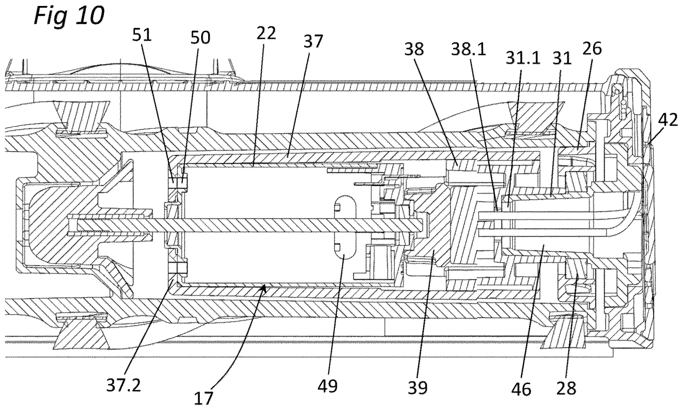

Le conduit d'écoulement d'air 46 est relié fluidiquement à un logement interne délimité par le compartiment moteur 19 (et formant en partie la première portion de circuit 41.1) via au moins un orifice de passage 31.1 (voir la figure 10) prévu sur le support de palier 31 et débouchant dans le conduit d'écoulement d'air 46, et au moins un passage d'écoulement d'air 38.1 (voir les figures 6 et 10) prévu sur le support de capot 38 et reliant fluidiquement l'au moins un orifice de passage 31.1 au logement interne délimité par le compartiment moteur 19.

De façon avantageuse, le circuit de refroidissement par circulation d'air 41 est configuré de telle sorte que, lorsque le moteur d'entraînement 17 est en marche, l'air, mis en circulation dans la première portion de circuit 41.1, s'écoule au moins en partie à l'intérieur du moteur d'entraînement 17. A cet effet, la première portion de circuit 41.1 comporte au moins une ouverture d'entrée d'air 49 prévue sur une paroi périphérique du carter de moteur 22 et à travers laquelle l'air, mis en circulation dans le circuit de refroidissement par circulation d'air 41 lorsque le moteur d'entraînement 17 est en marche, est apte à pénétrer dans le moteur d'entraînement 17, et au moins une ouverture de sortie d'air 51 prévue sur un paroi d'extrémité du carter de moteur 22 (qui est située à l'opposé du premier support de brosse 26) et à travers laquelle l'air, ayant pénétré dans le moteur d'entraînement 17 via l'au moins une ouverture d'entrée d'air 49, est apte à s'écouler à l'extérieur du moteur d'entraînement 17. De façon avantageuse, l'au moins une ouverture d'entrée d'air 49 est orientée sensiblement radialement et débouche dans le logement interne délimité par le compartiment moteur 19, et l'au moins une ouverture de sortie d'air 51 est orientée sensiblement axialement.

Comme montré sur la figure 6, le compartiment moteur 19 et le corps de brosse 12 délimite une chambre de liaison 52 qui est située axialement à l'opposé du premier support de brosse 26 par rapport au moteur d'entraînement 17 et qui est configurée pour relier fluidiquement la première portion de circuit 41.1 à la deuxième portion de circuit 41.2. De façon avantageuse, l'au moins une ouverture de sortie d'air 51, prévue sur le carter de moteur 22, est reliée fluidiquement à la chambre de liaison 52 par l'intermédiaire d'au moins un orifice de liaison 51 (voir la figure 10) prévu sur le capot de moteur 37, et plus particulièrement sur la paroi d'extrémité 37.2 du capot de moteur 37.

Selon le mode de réalisation représenté sur les figures, le circuit de refroidissement par circulation d'air 41 est configuré de telle sorte que, lorsque le moteur d'entraînement 17 est en marche, l'air, mis en circulation dans la deuxième portion de circuit 41.2, s'écoule entre une surface externe du compartiment moteur 19 et une surface interne du corps de brosse 12, avant d'atteindre les trous traversants 44 prévus sur le premier support de brosse 26. De façon avantageuse, le circuit de refroidissement par circulation d'air 41 est configuré de telle sorte que, lorsque le moteur d'entraînement 17 est en marche, l'air, mis en circulation dans la deuxième portion de circuit 41.2, s'écoule sensiblement parallèlement à l'axe longitudinal central A du corps de brosse 12.

Un refroidissement du premier palier 28 et du moteur d'entraînement 17 par l'intermédiaire du circuit de refroidissement par circulation d'air 41 est décrit ci-après.

En conditions d'utilisation de la tête d'aspiration 2 selon la présente invention, et en particulier lorsque le moteur d'entraînement 17 est en marche, de l'air est aspiré dans le circuit de refroidissement par circulation d'air 41 via l'au moins une ouverture d'admission d'air 42 en raison notamment de la dépression générée dans chacun des trous traversants 44 prévus sur le premier support de brosse 26. L'air, mis en circulation dans le circuit de refroidissement par circulation d'air 41, s'écoule ensuite dans le conduit d'écoulement d'air 46 où il assure un refroidissement, par conduction thermique, du support de palier 31 et de la bague interne 28.1 du premier palier 28, puis l'air s'écoule à travers le support de palier 31 et le support de capot 38 (via l'au moins un orifice de passage et l'au moins un passage d'écoulement), et pénètre à l'intérieur du moteur d'entraînement 17 (via l'ouverture d'entrée d'air 49) où il assure un refroidissement, par conduction thermique, du rotor et/ou du stator du moteur d'entraînement 17. L'air est ensuite évacué hors du moteur d'entraînement 17 via l'au moins une ouverture de sortie d'air 51, pénètre dans la chambre de liaison 52 via l'au moins un orifice de liaison, s'écoule en direction du premier support de brosse 26 via le passage longitudinal annulaire délimité entre le compartiment moteur 19 et le corps de brosse 12, et est évacué hors de la brosse rotative 11 via les trous traversants 44 et est aspiré dans le conduit d'aspiration. En s'écoulant à travers les trous traversants 44, l'air assure un refroidissement, par conduction thermique, du premier support de brosse 26 et de la bague externe 28.2 du premier palier 28.

Comme montré sur la figure 9, la paroi interne 32 du premier support de brosse 26 comporte une pluralité d'ouvertures traversantes radiales 54 réparties autour de l'axe central du premier support de brosse 26. Chaque ouverture traversante radiale 54 s'étend selon une direction radiale et débouche dans un trou traversant 44 respectif prévu sur le premier support de brosse 26, et est située en regard du premier palier 28, et plus particulièrement en regard de la bague externe 28.2 du premier palier 28. Une telle configuration du premier support de brosse 26 permet de favoriser encore le refroidissement du premier palier 28 par les flux d'air s'écoulant à travers les trous traversants 44.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Tête d'aspiration (2) comprenant :
- un corps principal (4) comportant une chambre d'aspiration (9) débouchant dans une face inférieure (6) du corps principal (4) qui est configurée pour être orientée vers une surface à nettoyer,
- une brosse rotative (11) comprenant un corps de brosse (12) qui a une forme globalement tubulaire et qui présente un axe longitudinal central (A), le corps de brosse (12) étant monté mobile en rotation dans la chambre d'aspiration (9) autour d'un axe de rotation qui est sensiblement coaxial avec l'axe longitudinal central (A) du corps de brosse (12),
- un dispositif d'entraînement (16) configuré pour entraîner en rotation le corps de brosse (12) autour de l'axe de rotation, le dispositif d'entraînement (16) comportant un moteur d'entraînement (17),
- un compartiment moteur (19) qui est fixe par rapport au corps principal (4) et dans lequel est au moins en partie disposé le moteur d'entraînement (17), le compartiment moteur (19) et le moteur d'entraînement (17) étant au moins en partie disposés dans un logement de moteur (21) délimité par le corps de brosse (12), et
- un circuit de refroidissement par circulation d'air (41) relié fluidiquement à la chambre d'aspiration (9), la tête d'aspiration (2) étant configurée de telle sorte que, lorsqu'une dépression est générée dans la chambre d'aspiration (9), de l'air est aspiré dans le circuit de refroidissement par circulation d'air (41) depuis l'extérieur de la brosse rotative (11) et est mis en circulation dans le circuit de refroidissement par circulation d'air (41),
**caractérisée en ce que** le circuit de refroidissement par circulation d'air (41) comporte une première portion de circuit (41.1) qui est délimitée en partie par le moteur d'entraînement (17) et une deuxième portion de circuit (41.2) qui est délimitée en partie par le compartiment moteur (19) et le corps de brosse (12) et qui est située en aval de la première portion de circuit (41.1), et **en ce que** le circuit de refroidissement par circulation d'air (41) est configuré de telle sorte que, lorsqu'une dépression est générée dans la chambre d'aspiration (9), l'air, mis en circulation dans la première portion de circuit (41.1), s'écoule au moins en partie à l'intérieur du moteur d'entraînement (17), et de telle sorte que, l'air, mis en circulation dans la deuxième portion de circuit (41.2), s'écoule au moins en partie entre le compartiment moteur (19) et le corps de brosse (12).

2. Tête d'aspiration (2) selon la revendication 1, dans laquelle la première portion de circuit (41.1) comporte au moins une ouverture d'entrée d'air (49) prévue sur une paroi périphérique d'un carter de moteur (22) du moteur d'entraînement (17) et à travers laquelle l'air, mis en circulation dans le circuit de refroidissement par circulation d'air (41) lorsqu'une dépression est générée dans la chambre d'aspiration (9), est apte à pénétrer dans le moteur d'entraînement (17), et au moins une ouverture de sortie d'air (51) prévue sur un paroi d'extrémité du carter de moteur (22) et à travers laquelle l'air, ayant pénétré dans le moteur d'entraînement (17) via l'au moins une ouverture d'entrée d'air (49), est apte à s'écouler à l'extérieur du moteur d'entraînement (17).

3. Tête d'aspiration (2) selon la revendication 2, dans laquelle l'au moins une ouverture d'entrée d'air (49), prévue sur la carter de moteur (22), est orientée sensiblement radialement et l'au moins une ouverture de sortie d'air (51), prévue sur la carter de moteur (22), est orientée sensiblement axialement.

4. Tête d'aspiration (2) selon l'une quelconque des revendications 1 à 3, dans laquelle le corps de brosse (12) comporte une première portion d'extrémité (12.1) délimitant le logement de moteur (21) et une deuxième portion d'extrémité (12.2) située à l'opposé de la première portion d'extrémité (12.1), et la tête d'aspiration (2) comporte un premier support de brosse (26) fixé à la première portion d'extrémité (12.1) du corps de brosse (12) et configuré pour supporter ladite première portion d'extrémité (12.1) et un deuxième support de brosse (27) fixé à la deuxième portion d'extrémité (12.2) du corps de brosse (12) et configuré pour supporter ladite deuxième portion d'extrémité (12.2).

5. Tête d'aspiration (2) selon la revendication 4, dans laquelle le moteur d'entraînement (17) est disposé axialement entre les premier et deuxième supports de brosse (26, 27).

6. Tête d'aspiration (2) selon la revendication 4 ou 5, dans laquelle le circuit de refroidissement par circulation d'air (41) est configuré de telle sorte, lorsqu'une dépression est générée dans la chambre d'aspiration (9), l'air, mis en circulation dans le circuit de refroidissement par circulation d'air (41), s'écoule dans la première portion de circuit (41.1) en s'éloignant du premier support de brosse (26), et s'écoule dans la deuxième portion de circuit (41.2) en direction du premier support de brosse (26).

7. Tête d'aspiration (2) selon l'une quelconque des revendications 4 à 6, laquelle comporte un premier palier (28) configuré pour guider en rotation le premier support de brosse (26) et un deuxième palier (29) configuré pour guider en rotation le deuxième support de brosse (27), le premier support de brosse (26) étant interposé entre le premier palier (28) et une surface circonférentielle interne du corps de brosse (12).

8. Tête d'aspiration (2) selon la revendication 7, laquelle comporte un support de palier (31) qui est fixe par rapport au corps principal (4), le premier palier (28) étant monté sur le support de palier (31) et supporté par le support de palier (31).

9. Tête d'aspiration (2) selon la revendication 8, dans laquelle le support de palier (31) délimite un conduit d'écoulement d'air (46) qui forme en partie la première portion de circuit (41.1), le palier (28) s'étendant autour du conduit d'écoulement d'air (46).

10. Tête d'aspiration (2) selon l'une quelconque des revendications 4 à 9, dans laquelle le circuit de refroidissement par circulation d'air (41) est délimité au moins en partie par le premier support de brosse (26).

11. Tête d'aspiration (2) selon l'une quelconque des revendications 4 à 10, dans laquelle le premier support de brosse (26) est annulaire et comporte au moins un trou traversant (44) qui débouche respectivement dans une première face axiale (26.1) du premier support de brosse (26) qui est orientée vers le moteur d'entraînement (17) et dans une deuxième face axiale (26.2) du premier support de brosse (26) qui est opposée à la première face axiale (26.1), l'au moins un trou traversant (44) étant relié fluidiquement à la chambre d'aspiration (9) et la tête d'aspiration (2) étant configurée de telle sorte que, lorsqu'une dépression est générée dans la chambre d'aspiration (9), un flux d'air s'écoule au travers de l'au moins un trou traversant (44) et depuis la première face axiale (26.1) du premier support de brosse (26) vers la deuxième face axiale (26.2) du premier support de brosse (26).

12. Tête d'aspiration (2) selon la revendication 11 en combinaison avec la revendication 7, dans laquelle le premier support de brosse (26) comporte une paroi interne (32) qui est globalement cylindrique et qui s'étend autour et au contact du premier palier (28), la paroi interne (32) du premier support de brosse (26) comportant au moins une ouverture traversante radiale (54), s'étendant selon une direction radiale, débouchant dans l'au moins un trou traversant (44) prévu sur le premier support de brosse (26) et étant située en regard du premier palier (28).

13. Tête d'aspiration (2) selon la revendication 11 ou 12, dans laquelle le circuit de refroidissement par circulation d'air (41) comporte au moins une ouverture d'évacuation d'air au travers de laquelle l'air s'écoulant dans le circuit de refroidissement par circulation d'air (41) est apte à être évacué hors du circuit de refroidissement par circulation d'air (41), l'au moins une ouverture d'évacuation d'air étant formée par l'au moins un trou traversant (44) prévu sur le premier support de brosse (26).

14. Tête d'aspiration (2) selon l'une quelconque des revendications 11 à 13, dans laquelle l'au moins un trou traversant (44) prévu sur le premier support de brosse (26) est délimité au moins en partie par au moins une paroi de guidage de flux (45) qui est inclinée par rapport à un axe central du premier support de brosse (26) et qui est configurée pour générer une dépression au sein de l'au moins un trou traversant (44) lorsque le moteur d'entraînement (17) est en marche.

15. Tête d'aspiration (2) selon l'une quelconque des revendications 11 à 14, dans laquelle le premier support de brosse (26) forme une turbine pourvue d'ailettes de guidage de flux réparties autour d'un axe central du premier support de brosse (26), chaque paire d'ailettes de guidage de flux adjacentes délimitant en partie un trou traversant (44) respectif.
